# EUROPEAN PATENT SPECIFICATION

(11) **EP 2 835 945 B1**
(45) Date of publication and mention of the grant of the patent: **12.07.2017**
(21) Application number: 13179893.6
(22) Date of filing: 09.08.2013
(51) Int. Cl.: B60K 35/00, B60K 37/06, H04W 4/00

(54) **AUTOMOTIVE COMMUNICATION SYSTEM AND METHOD OF COMMUNICATION BETWEEN AN AUTOMOTIVE INPUT DEVICE AND A MOBILE DEVICE**
KOMMUNIKATIONSSYSTEM FÜR FAHRZEUGE UND VERFAHREN ZUR KOMMUNIKATION ZWISCHEN EINER FAHRZEUGEINGABEVORRICHTUNG UND EINER MOBILEN VORRICHTUNG
SYSTÈME DE COMMUNICATION POUR AUTOMOBILE ET PROCÉDÉ DE COMMUNICATION ENTRE UN DISPOSITIF D'ENTRÉE D'AUTOMOBILE ET UN DISPOSITIF MOBILE

(43) Date of publication of application: 11.02.2015
(73) Proprietor: Alpine Electronics, Inc., Tokyo (JP)
(72) Inventor: Kueper, Thorsten, 70567 Stuttgart (DE)
(74) Representative: Schmitt-Nilson Schraud Waibel Wohlfrom Patentanwälte Partnerschaft mbB

(56) References cited:
- DE-B3-102005 048 427
- US-A1- 2006 212 179
- US-A1- 2010 037 057

## Description

The present invention is related to an automotive communication system comprising an automotive input device for use in a vehicle and a mobile device which are adapted to be coupled with each other for exchanging signal communication between them, wherein the mobile device comprises a HMI generating unit for generating a human machine interface with a functionality for interaction with a user. The invention is further related to a method of communication between an automotive input device and a mobile device.

In the area of automotive communication systems, recently increasing efforts have been made to provide solutions for connecting mobile devices, such as mobile phones, to automotive input devices, such as in-vehicle infotainment systems, allowing unprecedented functionality through two-way links between mobile phones and in-vehicle displays. For example, technologies have been developped which allow in-car systems such as digital displays, audio systems and steering wheel buttons to seamlessly connect to the driver or passenger's mobile device.

For the communication between a mobile device and a head unit or infotainment system of a vehicle the so-called MirrorLink Protocol could be (partly) used. MirrorLink™ (previously known as Terminal Mode) offers seamless connectivity between a smartphone and the car infotainment system. The consumer merely gets into the car, connects the phone with a cable, and immediately gains access to phone applications through car controls such as the navigation screen and steering wheel buttons. In other words, by allowing consumers to access their smartphone in the same way they access their car radio MirrorLink™ allows consumers to use their smartphones safely and simply, keeping eyes on the road and hands on the wheel. US 2006/0212179 A1 describes a car receiver for a car entertainment or infotainment system which can be used in combination with a variety of broadcast and navigation signals. The receiver system comprises a receiver module, a server subsystem to handle received data, a local storage device to retain the received data and a connectivity box for connecting external links. The server processor handles the control of the receiver module and also controls the streaming of received data to store locally on the memory. Using, for example, WLAN or Bluetooth, the server is able to connect to neighbouring mobile devices, wherein with this local connectivity the car receiver can connect to a mobile phone for the purpose of using the mobile phone as a Graphical User Interface (GUI) for the applications running on the server's processor of the car receiver. The wireless connectivity can be used to link the car receiver with an external mobile phone, which allows to use that external handset to act as a GUI for the applications running on the server subsystem.

US 2010/037057 A1 describes a system for allowing application services of mobile devices to run on vehicles by way of dynamic capability discovery and application program transfer at runtime. MirrorLink™ is based on a set of well established, non-proprietary technologies. It uses standard Internet technologies (such as Internet Protocol) for compatibility with a wide range of devices. It also uses technologies already common in the car, such as Bluetooth™ and USB, and newly-introduced car technologies such as Wi-Fi as well. Universal Plug and Play (UPnP™) is used for controlled access to applications. Virtual Network Computing (VNC™) is used to replicate the phone's display on the navigation screen and communicate user inputs back to the phone. Besides Bluetooth™, audio can also be streamed using the Real-Time Protocol (RTP). MirrorLink™ also provides a mechanism that ensures only approved applications are accessible while driving. Applications will be approved using a standardize testing process. For further information, it is referred to www.mirrorlink.com. Further, BMW as a car manufacturer uses a proprietary protocol to integrate functions of a mobile device into the human machine interface of a head unit of a car. In next generations of automotive input devices, such as infotainment systems, more and more functions will be realized via connected mobile devices. This trend leads to the problem that the human machine interface (so-called HMI) will be generated on two separated instances, namely on the automotive infotainment system (such as the head unit (HU) of the car) and on the mobile device. However, mobile devices will typically be updated or replaced more frequently than in-vehicle head units which will lead to inconsistencies over time between the HMI of the head unit and the HMI of the mobile device if the mobile device and/or its software (such as an operating system or an application thereof) is updated or replaced.

It is therefore an object to provide an automotive communication system and a method of communication between an automotive input device and a mobile device which are capable to provide a homogeneous HMI within a distributed system and to make it easier to keep the HMI up to date.

In a first aspect, there is provided an automotive communication system comprising an automotive input device for use in a vehicle and a mobile device which are adapted to be coupled with each other for exchanging signal communication between them. The mobile device comprises a HMI generating unit for generating a human machine interface with a functionality for interaction with a user, the automotive input device comprises a transmitting unit for transmitting to the HMI generating unit a description of at least one application implemented on the automotive input device and a description of functions supported by the application. The HMI generating unit is configured to generate the human machine interface based on the description of the at least one application and the description of functions supported by the application and to provide the human machine interface to the automotive input device for controlling the at least one application and at least one of the functions supported by the application by user interaction on the human machine interface provided on the automotive input device.

According to another aspect, there is provided a method of communication between an automotive input device for use in a vehicle and a mobile device which are adapted to be coupled with each other for exchanging signal communication between them, wherein the mobile device comprises a HMI generating unit for generating a human machine interface with a functionality for interaction with a user, the method comprising the following steps:
- the automotive input device transmitting to the HMI generating unit of the mobile device a description of at least one application which is adapted to run on the automotive input device and a description of functions supported by the application,
- the automotive input device receiving from the HMI generating unit a generated human machine interface for controlling the at least one application and at least one of the functions supported by the application by user interaction on the human machine interface running on the automotive input device, with the human machine interface generated by the HMI generating unit based on the transmitted description of an application and the description of functions supported by the application.

A human machine interface (abbreviated in the art as "HMI") shall be used herein in a sense as normally understood by the skilled person, particularly as covering any kind of means for handling input or input/output by interaction through a user, so that the user may interact through the HMI with the mobile device and/or the automotive input device. For example, it may be or comprise a graphical user interface (GUI) and/or acoustical input/output means.

For example, the human machine interface is generated such as to provide at least one function of the mobile device and at least one of the functions of the automotive input device in a common human machine interface. For instance, the HMI generating unit of the mobile device can merge functions of the mobile device and the automotive input device (e.g., implemented as head unit) into one human machine interface. The HMI generating unit is thus configured to generate the human machine interface such as to provide at least one function of the mobile device and at least one of the functions of the automotive input device in a common human machine interface.

According to an embodiment, the transmitting unit comprises an application service managing unit which is configured to generate the description of an application and the description of functions supported by the application of the automotive input device in a format conforming to a specification supported by the mobile device. In this way, an interface in the form of the application service managing unit is provided which ensures that a data protocol is used which is understood by the mobile device and which is conforming to a specification of functions and their description.

For example, the description of an application includes one or more of the following items of information: an application name and/or an application category, and may additionally include information on at least one HMI element indicating the application on the human machine interface. For example, an application may be a Radio broadcast application, with an application name "Radio" and an application category such as "radio", "tuner" or "broadcast service".

For instance, the description of functions includes one or more of the following items of information: a service category and/or a declarative service description, and may additionally include information on at least one HMI element indicating one or more functions on the human machine interface. In the above example, a service category may be "scan-up" or "get frequency", the declarative service description may describe the technical function behind to be performed when the service category "scan-up" or "get frequency" is selected, and an HMI element may be an icon on a display screen to be pressed.

According to an embodiment, the transmitting unit of the automotive input device is configured to transmit the description of functions using a cross-platform application framework for implementing an application in a human machine interface. For example, such cross-platform application framework may be Qt as commonly known by the skilled person as cross-platform application framework that is widely used for developing application software with a GUI and also used for developing non-GUI programs such as command-line tools.

According to a further embodiment, the transmitting unit of the automotive input device is configured to transmit the description of functions using a declarative language for designing user interface applications. For example, such declarative language may be QML (here used as declarative HMI description) often used for designing user interface-centric applications. Functions, for example, may be defined in XML language.

According to a further embodiment, the automotive input device comprises an input-output unit which is adapted to be coupled with the mobile device and provided with the human machine interface from the HMI generating unit of the mobile device. For example, the input-output unit comprises a display screen for displaying a GUI, wherein the GUI is generated by the HMI generating unit of the mobile device and transmitted to the input-output unit. The mobile device is configured to receive user input via the input-output unit of the automotive input device and to control at least one function of the automotive input device via signal transmission from the mobile device to the automotive input device based on the received user input. For example, the user presses or touches a button on the display screen of the input-output unit generated by the mobile device which is transferred to the mobile device and back to the automotive input device for control thereof, and thus the user selects a function to be performed by the automotive input device.

According to an embodiment, the automotive input device comprises an automotive HMI generating unit for generating a human machine interface to be provided to the input-output unit, wherein the automotive input device is configured to deactivate the automotive HMI generating unit if a signal coupling between the automotive input device and the mobile device is detected. In this case, the HMI on the input-output unit is provided by the mobile device, so that the automotive HMI generating unit can be deactivated.

For example, for detecting a signal coupling between the automotive input device and the mobile device, the automotive input device is configured to perform a handshake process for ascertaining that the automotive input device and the mobile device are supporting the transmission of the descriptions of an application and functions and the transmission of the human machine interface from the mobile device to the automotive input device.

In a preferred embodiment, the human machine interface generated by the HMI generating unit is a graphical user interface. Further, preferably the automotive input device comprises or is a head unit and/or an infotainment system of the vehicle. For example, the mobile device comprises or is a mobile telephone or a mobile control module.

Basically, the invention can be used in various automotive communication systems in which functions are distributed within the system and a single and/or homogenious HMI is advantageous. As an automotive input device, any device for use in a vehicle can be employed which is capable to receive user input via an HMI. For example, the automotive input device is an automotive input/output device which receives user input and also provides appropriate output to the user, such as an infotainment system, a navigation system, an audio system, or broadcast system. As the mobile device, e.g. a mobile telephone or a mobile control module may be used. Preferably, the mobile device provides an HMI to the user, such as a GUI on a display, which HMI can basically also be used on the automotive input device. As a mobile control module, any control module can be used which provides an HMI to the user, such as GUI on a display.

The invention will now be described by way of exemplary embodiments with reference to the following Figures, in which
- Fig. 1: shows an embodiment of an automotive communication system with a mobile device and an automotive input device implemented as a head unit of a car,
- Fig. 2: shows an embodiment of an automotive communication system according to Fig. 1 in a more detailed view.

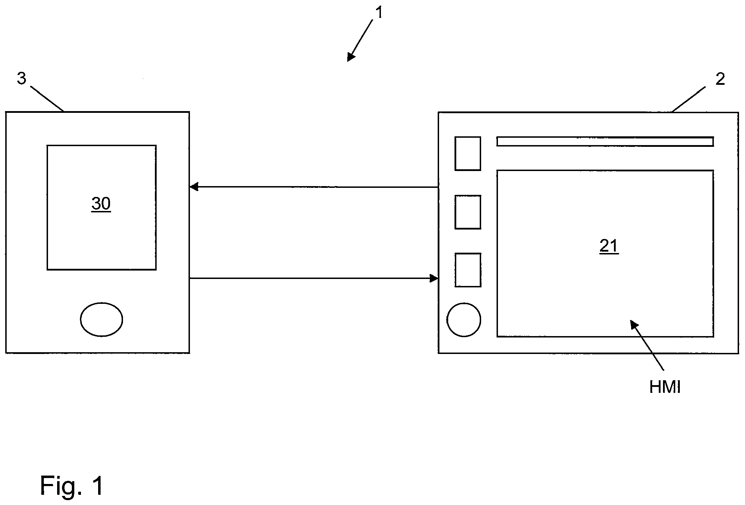

In Fig. 1, an automotive communication system 1 according to an embodiment of the invention is shown, in which an automotive input device 2 and a mobile device 3 may be coupled with each other to exchange signal communication with each other. For example, the automotive input device 2 is implemented in or is a head unit of a car which is typically placed in the mid console of the car interior. According to another embodiment, the automotive input device 2 may be part of or is an infotainment system of a car, which may be implemented in a head unit or elsewhere in the car. In the following, aspects of the invention will be described in more detail with reference to an embodiment in which the automotive input device 2 is implemented as a head unit (HU) of a car.

The automotive input device 2 comprises an input-output unit 21, in the present example a display screen which may be implemented as a touch screen. On the display screen 21, a human machine interface (typically called in the art as "HMI") is provided which has a functionality for interaction with a user. For example, elements such as icons or buttons (not shown) are displayed on the display screen 21 which, upon being pressed or touched by the user, initiate a predetermined function of the automotive input device 2. Besides the display screen 21, further input buttons or knobs may be provided for receiving an input action by the user.

The mobile device 3 may be a mobile telephone or may be a mobile control module. It also comprises an input-output unit 30, in the present example a display which is implemented as a touch screen. On the display 30, a human machine interface may be provided with a functionality for interaction with a user as is known in the art. Basically, any type of mobile device can be used which is appropriate to generate an HMI for controlling purposes as explained in more detail below. In the following, aspects of the invention will be explained with reference to a mobile device 3 which is implemented as a mobile phone.

Users nowadays are quite frequently using mobile phones in everyday life and, therefore, are usually familiar with the HMI (typically the GUI) provided on the display of the mobile phone. On the other hand, mobile phones are typically updated or replaced more frequently (e.g., every two years) than head units of cars, which usually are renewed only when buying a new car. It may be advantageous if the HMI on the HU 2 and the HMI on the mobile device 3 are quite similar in appearance and functions so that the user, who is quite used to the HMI of the mobile phone, has no difficulty in finding functions on the HMI of the HU 2. However, the frequent updating or renewal of the mobile phone with a changing HMI may lead to inconsistencies between the HMI of the HU 2 and the HMI of the mobile phone 3. Typically with every new mobile device generation the HMI will be updated. If parts of the HMI are generated on the head unit and another part is generated on the mobile device, the HMI will become heterogeneous.

As set out above, in next generation automotive infotainment systems more and more functions will be realized via connected (mobile) devices. This trend leads to the problem that the HMI will be generated at two separated instances (HU and mobile device). The concept as provided herein describes a solution which makes it possible to generate a homogenous HMI on the mobile device side. The generated HMI will then be transferred to the automotive input device and presented to the user through appropriate input-output device(s) thereof, as explained in more detail below.

The HU 2 and mobile device 3 may be coupled with each other for exchanging signal communication between them using technologies already common in cars, e.g. in wired or wireless connection, such as Bluetooth™, USB, and/or Wi-Fi.

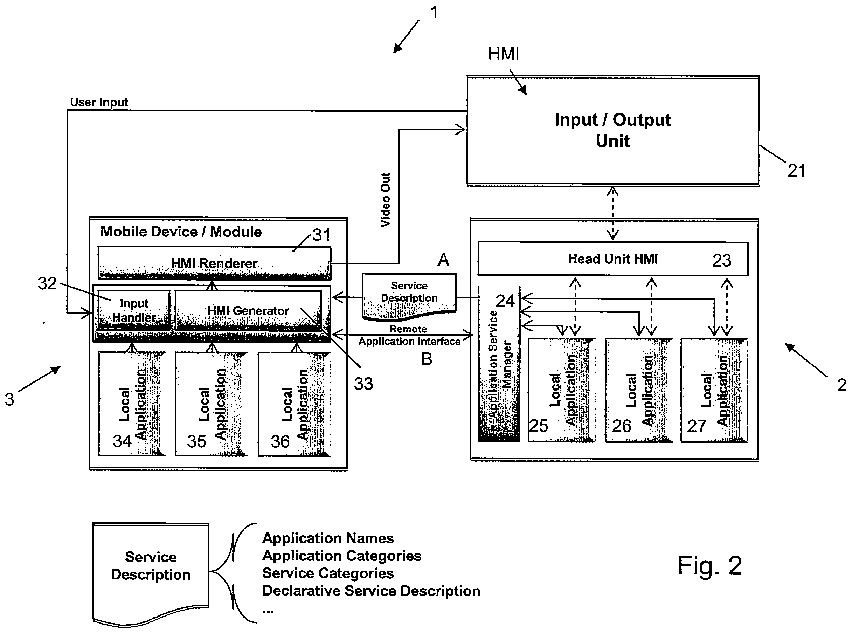

Now referring in more detail to Fig. 2, the mobile device 3 comprises the following components which may be implemented in hardware and/or software (e.g. as respective layers) on the mobile device: An HMI generating unit 33 is configured to generate an HMI, for example a GUI on the display 30 of the mobile device 3. The HMI generating unit 33 provides input to an HMI rendering unit 31 which provides the appropriate signals to the display for displaying the HMI elements. The HMI rendering unit 31 may be coupled (by wired or wireless connection, see above) to the input-output unit 21 of the HU, i.e. the display screen, providing the appropriate signals (via "video out") to the display screen 21 of the HU 2 for displaying the HMI. Alternatively, the HMI rendering unit 31 may be coupled (by wired or wireless connection) to the processing part of the HU 2 which then communicates with the display screen 21, providing the appropriate signals (via "video out") to the display screen 21 for displaying the HMI via the processing part (e.g., unit 23) of the HU 2.

That is, the HMI generated by the HMI generating unit 33 may be provided to the display screen 21 of the HU for displaying the HMI on the display screen. Further, user input provided by user interaction on the HMI on the display screen 21 may be provided to an input handling unit 32 of the mobile device 3. On the mobile device 3, several applications 34 to 36 may be implemented, e.g. stored in a memory of the mobile device, such as a phoning application, email and/or media playing application, which may be activated by appropriate user interaction on the HMI.

The HU 2, on the other hand, comprises an automotive HMI generating unit 23 for generating an HMI with a functionality for interaction with a user on the display screen 21, particularly when no mobile device is conntected to the HU 2. It also comprises several applications 25 to 27, e.g. stored in a memory of the HU 2, such as radio broadcast, media playing or navigation applications, which may be activated by the user via the HMI on the display screen 21. The HU 2 further comprises an application service managing unit 24 which is configured to provide an appropriate interface to the mobile device 3, particularly a two-way signal communication interface, as desribed in the following. It particularly functions as a transmitting unit regarding the generation of an HMI as set out in more detail below.

In the following, a functionality between the HU 2 and the mobile device 3 will be described in more detail according to an embodiment of the present invention.

In a first stage, the application service managing unit 24 in the function of a transmitting unit transmits to the HMI generating unit 33 of the mobile device 3 a description of one or more of the applications 25-27 of the HU 2 (e.g. a list of applications available or stored on the HU 2) and a description of functions supported by the application(s), designated in Fig. 2 as "service description" A.

For example, the description of application(s) includes a respective application name, application category and information on one or more HMI elements (such as icons or buttons) indicating the respective application on the HMI. According to an embodiment, the description of functions may include a service category, a declarative service description and information on at least one HMI element indicating the function on the HMI.

For example, an application name may be "Radio", "Media Player", "Navigation", and an application category may be "radio broadcast", "media player" and "navigation", respectively. Exemplary service categories may be "scan-up", "scan-down", "get frequency", "set frequency", "get station list", etc., and declarative service descriptions may be "trigger", "set" or "get" defining a respective function such as triggering an action, set a particular setting or parameter, or get particular data, respecively.

The description of functions may be transmitted by the application service managing unit 24 using a cross-platform application framework for implementing an application in a human machine interface, such as Qt, and using a declarative language for designing user interface applications, such as QML and XML. In other words, the functions to be transmitted from the HU 2 to the mobile device 3 may be defined in XML which serves as a basis for building the HMI by the HMI generating unit 33. Thus, a respective function transmitted from the HU, i.e. a respective function or service which can be performed by the HU, is defined as an input for generating an HMI by the HMI generating unit 33.

The HMI generating unit 33 generates the HMI based on the description of the application(s) and the description of functions supported by the application(s) and provides the HMI to the HU 2 for controlling the application(s) and one or more functions supported by the application(s) by user interaction on the HMI displayed on the display screen 21. If the user touches an icon or button associated with a particular function on the display screen 21, this is transmitted as user input to the input handling unit 32 of the mobile device 3. The mobile device 3 processes the received user input using the descriptions of application(s) and functions previously received from the HU 2 and provides, via the remote application interface B, appropriate control signals to the HU 2 for causing the HU to perform the respective function. The HU 2, on the other hand, may provide (again via remote application interface B) an appropriate return signal to the mobile device 3 when a function is being performed.

According to an embodiment, the HU 2 sends a list of available applications 25-27 to the mobile device 3, wherein for each application 25-27 a list of supported functions ("service description") is transmitted to the mobile device 3. The mobile device 3 is then generating the HMI based on the description(s) of applications and functions. The HMI is then transferred to the HU 2 and will be provided on the HU for controlling functions implemented on the HU by user interaction on the HMI, such as by touching appropriate elements on display screen 21.

According to an embodiment, the mobile device 3 can merge functions from the mobile device 3 and the HU 2 into one HMI . That is, the HMI generating unit 33 generates the HMI such as to provide one or more functions of the mobile device 3 and one or more functions of the HU 2 in a common HMI.

The application service managing unit 24 is configured such as to generate the description of application(s) and the description of functions supported by the application(s) of the HU 2 in a format conforming to a specification supported by the mobile device 3. Thus, the application service managing unit 24 provides an appropriate interface for transmitting the service description A from the HU 2 to the mobile device 3 and also ensures an appropriate remote application interface B.

On the other hand, the automotive HMI generating unit 23 for generating an HMI to be provided to the input-output unit 21 will be deactivated as soon as a mobile device 3 is detected by the application service managing unit 24, i.e if a signal coupling between the HU 2 and the mobile device 3 is detected. For this purpose, a handshake process may be performed for ascertaining that the HU 2 and the mobile device 3 are supporting the decribed functionality between them.

The invention provides the advantage that with generation of the HMI on the mobile device side, the HMI can be kept homogeneous without the need to update the head unit. Benefits of transmitting a functional description from the head unit to the mobile device for the purposes of generating an HMI on the mobile device side are particularly that sending a functional/declarative description instead of standard HMI elements has the advantage that the mobile device has the freedom to match functions to a specific HMI element so that the overall HMI stays consistent. Moreover, the mobile device can mix applications and functions of the head unit and the mobile device into one consistent HMI.

## Claims

1. An automotive communication system (1), comprising:
- an automotive input device (2) for use in a vehicle and a mobile device (3) which are adapted to be coupled with each other for exchanging signal communication between them,
- the mobile device (3) comprising a HMI generating unit (33) for generating a human machine interface, HMI, with a functionality for interaction with a user, **characterised in that**:
- the automotive input device (2) comprises a transmitting unit (24) for transmitting to the HMI generating unit (33) a description of at least one application (25-27) implemented on the automotive input device (2) and a description of functions supported by the application,
- wherein the HMI generating unit (33) is configured to generate the human machine interface, HMI, based on the description of the application (25-27) and the description of functions supported by the application and to provide the human machine interface, HMI, to the automotive input device (2) for controlling the application (25-27) and at least one of the functions supported by the application by user interaction on the human machine interface provided on the automotive input device (2).

2. The communication system according to claim 1, wherein the HMI generating unit (33) is configured to generate the human machine interface, HMI, such as to provide at least one function of the mobile device (3) and at least one of the functions of the automotive input device (2) in a common human machine interface.

3. The communication system according to claim 1 or 2, wherein the transmitting unit (24) comprises an application service managing unit (24) which is configured to generate the description of an application (25-27) and the description of functions supported by the application of the automotive input device (2) in a format conforming to a specification supported by the mobile device (3).

4. The communication system according to one of claims 1 to 3, wherein the description of an application (25-27) includes at least one of the following items of information: an application name and an application category.

5. The communication system according to one of claims 1 to 4, wherein the description of functions includes at least one of the following items of information: a service category and a declarative service description.

6. The communication system according to one of claims 1 to 5, wherein the transmitting unit (24) of the automotive input device (2) is configured to transmit the description of functions using a cross-platform application framework for implementing an application in a human machine interface.

7. The communication system according to one of claims 1 to 6, wherein the transmitting unit (24) of the automotive input device (2) is configured to transmit the description of functions using a declarative language for designing user interface applications.

8. The communication system according to one of claims 1 to 7, wherein
- the automotive input device (2) comprises an input-output unit (21) which is adapted to be coupled with the mobile device (3) and provided with the human machine interface, HMI, from the HMI generating unit (33) of the mobile device,
- the mobile device (3) is adapted to receive user input via the input-output unit (21) of the automotive input device and to control at least one function of the automotive input device (2) via signal transmission from the mobile device (3) to the automotive input device (2) based on the received user input.

9. The communication system according to one of claims 1 to 8, wherein
- the automotive input device (2) comprises an input-output unit (21) and an automotive HMI generating unit (23) for generating a human machine interface to be provided to the input-output unit (21), and
- the automotive input device (2) is configured to deactivate the automotive HMI generating unit (23) if a signal coupling between the automotive input device (2) and the mobile device (3) is detected.

10. The communication system according to claim 9, wherein for detecting a signal coupling between the automotive input device (2) and the mobile device (3), the automotive input device is configured to perform a handshake process for ascertaining that the automotive input device (2) and the mobile device (3) are supporting the transmission of the descriptions of an application and functions and the transmission of the human machine interface, HMI, from the mobile device to the automotive input device.

11. The communication system according to one of claims 1 to 10, wherein the human machine interface, HMI, generated by the HMI generating unit is a graphical user interface.

12. The communication system according to one of claims 1 to 11, wherein the automotive input device (2) comprises or is a head unit of the vehicle.

13. The communication system according to one of claims 1 to 12, wherein the mobile device (3) comprises or is a mobile telephone or a mobile control module.

14. A method of communication between an automotive input device (2) for use in a vehicle and a mobile device (3) which are adapted to be coupled with each other for exchanging signal communication between them, wherein the mobile device (3) comprises a HMI generating unit (33) for generating a human machine interface, HMI, with a functionality for interaction with a user, the method comprising:
- the automotive input device (2) transmitting to the HMI generating unit (33) of the mobile device (3) a description of at least one application (25-27) which is adapted to run on the automotive input device (2) and a description of functions supported by the application, **characterised in that**:
the automotive input device (2) receives from the HMI generating unit (33) a generated human machine interface, HMI, for controlling the application (25-27) and at least one of the functions supported by the application by user interaction on the human machine interface, HMI, running on the automotive input device (2), with the human machine interface, HMI, generated by the HMI generating unit (33) based on the transmitted description of the application (25-27) and the description of functions supported by the application.

15. The method according to claim 14, comprising the step of generating the human machine interface, HMI, such as to provide at least one function implemented on the mobile device (3) and at least one of the functions of the automotive input device (2) in a common human machine interface.

## Patentansprüche

1. Kommunikationssystem (1) für Fahrzeuge, das aufweist:
- eine Fahrzeugeingabevorrichtung (2) zur Verwendung in einem Fahrzeug und eine mobile Vorrichtung (3), die dafür ausgebildet sind, miteinander gekoppelt zu werden, um Signalkommunikation untereinander auszutauschen,
- wobei die mobile Vorrichtung (3) eine HMI-Erzeugungseinheit (33) zur Erzeugung einer Mensch-Maschine-Schnittstelle, HMI, mit einer Funktionalität für die Interaktion mit einen Benutzer aufweist,
**dadurch gekennzeichnet, dass**:
- die Fahrzeugeingabevorrichtung (2) eine Sendeeinheit (24) zur Übertragung einer Beschreibung mindestens einer Anwendung (25-27), die an der Fahrzeugeingabevorrichtung (2) implementiert ist, und einer Beschreibung von von der Anwendung unterstützten Funktionen an die HMI-Erzeugungseinheit (33) aufweist,
- wobei die HMI-Erzeugungseinheit (33) dafür konfiguriert ist, die Mensch-Maschine-Schnittstelle, HMI, auf Grundlage der Beschreibung der Anwendung (25-27) und der Beschreibung von von der Anwendung unterstützten Funktionen zu erzeugen und die Mensch-Maschine-Schnittstelle, HMI, der Fahrzeugeingabevorrichtung (2) bereitzustellen, um die Anwendung (25-27) und mindestens eine der von der Anwendung unterstützten Funktionen durch Benutzerinteraktion auf der an der Fahrzeugeingabevorrichtung (2) bereitgestellten Mensch-Maschine-Schnittstelle zu steuern.

2. Kommunikationssystem nach Anspruch 1, wobei die HMI-Erzeugungseinheit (33) dafür konfiguriert ist, die Mensch-Maschine-Schnittstelle, HMI, zu erzeugen, um mindestens eine Funktion der mobilen Vorrichtung (3) und mindestens eine der Funktionen der Fahrzeugeingabevorrichtung (2) in einer gemeinsamen Mensch-Maschine-Schnittstelle bereitzustellen.

3. Kommunikationssystem nach Anspruch 1 oder 2, wobei die Sendeeinheit (24) eine Anwendungsdienstverwaltungseinheit (24) aufweist, die dafür konfiguriert ist, die Beschreibung einer Anwendung (25-27) und die Beschreibung von von der Anwendung der Fahrzeugeingabevorrichtung (2) unterstützten Funktionen in einem Format zu erzeugen, das einer von der mobilen Vorrichtung (3) unterstützten Spezifizierung entspricht.

4. Kommunikationssystem nach einem der Ansprüche 1 bis 3, wobei die Beschreibung einer Anwendung (25-27) mindestens eine der folgenden Informationen umfasst: einen Anwendungsnamen und eine Anwendungskategorie.

5. Kommunikationssystem nach einem der Ansprüche 1 bis 4, wobei die Beschreibung von Funktionen mindestens eine der folgenden Informationen umfasst: eine Dienstkategorie und eine deklarative Dienstbeschreibung.

6. Kommunikationssystem nach einem der Ansprüche 1 bis 5, wobei die Sendeeinheit (24) der Fahrzeugeingabevorrichtung (2) dafür konfiguriert ist, die Beschreibung von Funktionen unter Verwendung eines plattformübergreifenden Anwendungsrahmens zur Implementierung einer Anwendung in einer Mensch-Maschine-Schnittstelle zu senden.

7. Kommunikationssystem nach einem der Ansprüche 1 bis 6, wobei die Sendeeinheit (24) der Fahrzeugeingabevorrichtung (2) dafür konfiguriert ist, die Beschreibung von Funktionen unter Verwendung einer deklarativen Sprache zur Gestaltung von Benutzerschnittstellenanwendungen zu senden.

8. Kommunikationssystem nach einem der Ansprüche 1 bis 7, wobei
- die Fahrzeugeingabevorrichtung (2) eine Eingabe/Ausgabe-Einheit (21) aufweist, die dafür ausgebildet ist, mit der mobilen Vorrichtung (3) gekoppelt zu werden und die Mensch-Maschine-Schnittstelle, HMI, von der HMI-Erzeugungseinheit (33) der mobilen Vorrichtung zu empfangen,
- wobei die mobile Vorrichtung (3) dafür ausgebildet ist, über die Eingabe/Ausgabe-Einheit (21) der Fahrzeugeingabevorrichtung eine Benutzereingabe zu empfangen und auf Grundlage der empfangenen Benutzereingabe mindestens eine Funktion der Fahrzeugeingabevorrichtung (2) über Signalübertragung von der mobilen Vorrichtung (3) an die Fahrzeugeingabevorrichtung (2) zu steuern.

9. Kommunikationssystem nach einem der Ansprüche 1 bis 8, wobei
- die Fahrzeugeingabevorrichtung (2) eine Eingabe/Ausgabe-Einheit (21) und eine Fahrzeug-HMI-Erzeugungseinheit (23) zum Erzeugen einer Mensch-Maschine-Schnittstelle, die der Eingabe/Ausgabe-Einheit (21) bereitzustellen ist, aufweist und
- die Fahrzeugeingabevorrichtung (2) dafür konfiguriert ist, die Fahrzeug-HMI-Erzeugungseinheit (23) zu deaktivieren, wenn eine Signalkopplung zwischen der Fahrzeugeingabevorrichtung (2) und der mobilen Vorrichtung (3) erfasst wird.

10. Kommunikationssystem nach Anspruch 9, wobei zum Erfassen einer Signalkopplung zwischen der Fahrzeugeingabevorrichtung (2) und der mobilen Vorrichtung (3) die Fahrzeugeingabevorrichtung dafür konfiguriert ist, einen Handshake-Prozess auszuführen, um zu bestimmen, dass die Fahrzeugeingabevorrichtung (2) und die mobile Vorrichtung (3) die Übertragung der Beschreibungen einer Anwendung und Funktionen und die Übertragung der Mensch-Maschine-Schnittstelle, HMI, von der mobilen Vorrichtung an die Fahrzeugeingabevorrichtung unterstützen.

11. Kommunikationssystem nach einem der Ansprüche 1 bis 10, wobei die von der HMI-Erzeugungseinheit erzeugte Mensch-Maschine-Schnittstelle, HMI, eine graphische Benutzerschnittstelle ist.

12. Kommunikationssystem nach einem der Ansprüche 1 bis 11, wobei die Fahrzeugeingabevorrichtung (2) eine Haupteinheit des Fahrzeugs aufweist oder ist.

13. Kommunikationssystem nach einem der Ansprüche 1 bis 12, wobei die mobile Vorrichtung (3) ein Mobiltelefon oder ein mobiles Steuermodul aufweist oder ist.

14. Verfahren zur Kommunikation zwischen einer Fahrzeugeingabevorrichtung (2) zur Verwendung in einem Fahrzeug und einer mobilen Vorrichtung (3), die dafür ausgebildet sind, miteinander gekoppelt zu werden, um Signalkommunikation untereinander auszutauschen,
wobei die mobile Vorrichtung (3) eine HMI-Erzeugungseinheit (33) zur Erzeugung einer Mensch-Maschine-Schnittstelle, HMI, mit einer Funktionalität für die Interaktion mit einem Benutzer aufweist, wobei das Verfahren aufweist:
- Übertragen einer Beschreibung mindestens einer Anwendung (25-27), die dafür ausgebildet ist, auf der Fahrzeugeingabevorrichtung (2) zu laufen, und einer Beschreibung von von der Anwendung unterstützten Funktionen an die HMI-Erzeugungseinheit (33) der mobilen Vorrichtung (3) durch die Fahrzeugeingabevorrichtung (2),
**dadurch gekennzeichnet, dass**:
- die Fahrzeugeingabevorrichtung (2) von der HMI-Erzeugungseinheit (33) eine erzeugte Mensch-Maschine-Schnittstelle, HMI, zum Steuern der Anwendung (25-27) und mindestens einer der von der Anwendung unterstützten Funktionen durch Benutzerinteraktion auf der Mensch-Maschine-Schnittstelle, HMI, die auf der Fahrzeugeingabevorrichtung (2) läuft, empfängt, wobei die Mensch-Maschine-Schnittstelle, HMI, von der HMI-Erzeugungseinheit (33) auf Grundlage der übertragenen Beschreibung der Anwendung (25-27) und der Beschreibung von von der Anwendung unterstützten Funktionen erzeugt wird.

15. Verfahren nach Anspruch 14, das den Schritt des Erzeugens der Mensch-Maschine-Schnittstelle, HMI, aufweist, um mindestens eine auf der mobilen Vorrichtung (3) implementierte Funktion und mindestens eine der Funktionen der Fahrzeugeingabevorrichtung (2) in einer gemeinsamen Mensch-Maschine-Schnittstelle bereitzustellen.

## Revendications

1. Système de communication d'automobile (1), comprenant :
- un dispositif d'entrée d'automobile (2) destiné à être utilisé dans un véhicule et un dispositif mobile (3) qui sont conçus pour être couplés l'un à l'autre afin d'échanger des communications par signaux entre eux,
- le dispositif mobile (3) comprenant une unité de génération d'IHM (33) pour générer une interface homme machine, IHM, à fonctionnalité d'interaction avec un utilisateur,
**caractérisé en ce que** :
- le dispositif d'entrée d'automobile (2) comprend une unité d'envoi (24) pour envoyer à l'unité de génération d'IHM (33) une description d'au moins une application (25-27) implémentée sur le dispositif d'entrée d'automobile (2) et une description de fonctions prises en charge par l'application,
- dans lequel l'unité de génération d'IHM (33) est configurée pour générer l'interface homme-machine, IHM, sur la base de la description de l'application (25-27) et de la description de fonctions prises en charge par l'application et pour fournir l'interface homme-machine, IHM, au dispositif d'entrée d'automobile (2) afin de commander l'application (25-27) et au moins une des fonctions prises en charge par l'application par interaction de l'utilisateur sur l'interface homme-machine fournie sur le dispositif d'entrée d'automobile (2).

2. Système de communication selon la revendication 1, dans lequel l'unité de génération d'IHM (33) est configurée pour générer l'interface homme-machine, IHM, de manière à fournir au moins une fonction du dispositif mobile (3) et au moins une des fonctions du dispositif d'entrée d'automobile (2) dans une interface homme-machine commune.

3. Système de communication selon la revendication 1 ou 2, dans lequel l'unité d'envoi (24) comprend une unité de gestion de service d'application (24) qui est configurée pour générer la description d'une application (25-27) et la description de fonctions prises en charge par l'application du dispositif d'entrée d'automobile (2) dans un format conforme à une spécification prise en charge par le dispositif mobile (3).

4. Système de communication selon l'une des revendications 1 à 3, dans lequel la description d'une application (25-27) comprend au moins un des éléments d'information suivants : un nom d'application et une catégorie d'application.

5. Système de communication selon l'une des revendications 1 à 4, dans lequel la description de fonctions comprend au moins un des éléments d'information suivants : une catégorie de service et une description de service déclarative.

6. Système de communication selon l'une des revendications 1 à 5, dans lequel l'unité d'envoi (24) du dispositif d'entrée d'automobile (2) est configurée pour envoyer la description de fonctions en utilisant un cadre d'applications multiplateforme pour implémenter une application dans une interface homme-machine.

7. Système de communication selon l'une des revendications 1 à 6, dans lequel l'unité d'envoi (24) du dispositif d'entrée d'automobile (2) est configurée pour envoyer la description de fonctions en utilisant un langage déclaratif pour concevoir des applications d'interface utilisateur.

8. Système de communication selon l'une des revendications 1 à 7, dans lequel :
- le dispositif d'entrée d'automobile (2) comprend une unité d'entrée-sortie (21) qui est conçue pour être couplée au dispositif mobile (3) et se voir fournir l'interface homme-machine, IHM, en provenance de l'unité de génération d'IHM (33) du dispositif mobile,
- le dispositif mobile (3) est conçu pour recevoir une entrée utilisateur par l'intermédiaire de l'unité d'entrée-sortie (21) du dispositif d'entrée d'automobile et pour commander au moins une fonction du dispositif d'entrée d'automobile (2) par l'intermédiaire d'une transmission de signaux du dispositif mobile (3) au dispositif d'entrée d'automobile (2) sur la base de l'entrée utilisateur reçue.

9. Système de communication selon l'une des revendications 1 à 8, dans lequel :
- le dispositif d'entrée d'automobile (2) comprend une unité d'entrée-sortie (21) et une unité de génération d'IHM d'automobile (23) pour générer une interface homme-machine à fournir à l'unité d'entrée-sortie (21), et
- le dispositif d'entrée d'automobile (2) est configuré pour désactiver l'unité de génération d'IHM d'automobile (23) si un couplage par signaux entre le dispositif d'entrée d'automobile (2) et le dispositif mobile (3) est détecté.

10. Système de communication selon la revendication 9, dans lequel, pour détecter un couplage par signaux entre le dispositif d'entrée d'automobile (2) et le dispositif mobile (3), le dispositif d'entrée d'automobile est configuré pour effectuer un processus d'établissement de liaison afin de s'assurer que le dispositif d'entrée d'automobile (2) et le dispositif mobile (3) prennent bien en charge la transmission des descriptions d'une application et de fonctions et la transmission de l'interface homme-machine, IHM, du dispositif mobile au dispositif d'entrée d'automobile.

11. Système de communication selon l'une des revendications 1 à 10, dans lequel l'interface homme-machine, IHM, générée par l'unité de génération d'IHM est une interface utilisateur graphique.

12. Système de communication selon l'une des revendications 1 à 11, dans lequel le dispositif d'entrée d'automobile (2) comprend ou est un autoradio du véhicule.

13. Système de communication selon l'une des revendications 1 à 12, dans lequel le dispositif mobile (3) comprend ou est un téléphone mobile ou un module de commande mobile.

14. Procédé de communication entre un dispositif d'entrée d'automobile (2) destiné à être utilisé dans un véhicule et un dispositif mobile (3) qui sont conçus pour être couplés l'un à l'autre afin d'échanger des communications par signaux entre eux, le dispositif mobile (3) comprenant une unité de génération d'IHM (33) pour générer une interface homme-machine, IHM, avec une fonctionnalité d'interaction avec un utilisateur, le procédé comprenant les étapes suivantes :
- le dispositif d'entrée d'automobile (2) envoie à l'unité de génération d'IHM (33) du dispositif mobile (3) une description d'au moins une application (25-27) qui est conçue pour tourner sur le dispositif d'entrée d'automobile (2) et une description de fonctions prises en charge par l'application,
**caractérisé en ce que** :
- le dispositif d'entrée d'automobile (2) reçoit en provenance de l'unité de génération d'IHM (33) une interface homme machine, IHM, générée pour commander l'application (25-27) et au moins une des fonctions prises en charge par l'application par interaction de l'utilisateur sur l'interface homme-machine, IHM, tournant sur le dispositif d'entrée d'automobile (2), l'interface homme-machine, IHM, générée par l'unité de génération d'IHM (33) étant basée sur la description transmise de l'application (25-27) et la description de fonctions prises en charge par l'application.

15. Procédé selon la revendication 14, comprenant l'étape de génération de l'interface homme-machine, IHM, de manière à fournir au moins une fonction implémentée sur le dispositif mobile (3) et au moins une des fonctions du dispositif d'entrée d'automobile (2) dans une interface homme-machine commune.
